# EUROPEAN PATENT SPECIFICATION

(11) **EP 2 176 092 B1**
(45) Date of publication and mention of the grant of the patent: **07.08.2019**
(21) Application number: 07748272.7
(22) Date of filing: 21.06.2007
(51) Int. Cl.: B60R 16/04

(54) **TRACTOR FOR A TRACTOR-TRAILER COMBINATION**
TRAKTOR FÜR EINE TRAKTOR-ANHÄNGER-KOMBINATION
TRACTEUR POUR UN ENSEMBLE TRACTEUR/REMORQUE

(43) Date of publication of application: 21.04.2010
(73) Proprietor: Volvo Lastvagnar AB, 405 08 Göteborg (SE)
(72) Inventor: ADLERSSON, Hans, SE-436 40 Askim (SE); WETSTERLIND, Hans, S-449 40 Nol (SE); STORJÖ, Thomas, S-474 95 Hälleviksstrand (SE); OLSSON, Gustav, SE-418 72 Göteborg (SE); JOHANSSON, Robert, SE-471 70 Göteborg (SE)
(74) Representative: Kransell & Wennborg KB
(86) International application number: PCT/SE2007/000610
(87) International publication number: WO 2008/156388

(56) References cited:
- WO-A1-2007/045365
- DE-A1- 3 710 961
- DE-A1- 19 609 497
- US-A- 4 013 136
- US-A- 5 593 167

## Description

### TECHNICAL FIELD

The present invention relates to a tractor for a tractor-trailer combination wherein an intermediate space having a pre-selected centre length being less than 20 cm extends from a rear wall of the tractor cab and to a swing clearance area travelled by a corner of the trailer when turning about the tractor. The invention also relates to a battery compartment for a tractor-trailer combination.

### BACKGROUND OF THE INVENTION

The present invention relates to the field of load carrying vehicles such as lorries or trucks, of the type comprising a tractor combined with a separate trailer. This type of vehicle is often referred to as a semi-trailer. A different type of load carrying vehicle is a rigid vehicle, where the load compartment is rigidly attached to the chassis frame. Typically, in such tractor-trailer combinations that are considered for the present invention, the trailer is detachably connected to the tractor by means of a so called fifth wheel connection. The fifth wheel connection forms a joint around which the trailer may pivot such that, when the tractor-trailer combination turns e.g. around a corner, the trailer will swing with respect to the tractor. Hence, the turning circle required for a tractor-trailer combination is less than the required turning circle of a rigid vehicle, provided the vehicles have the same total length.

Laws and regulations of different states around the world limit the allowed maximum lengths of tractor-trailer combinations. Naturally, it is generally desired to maximise the loading space of the tractor-trailer combination within the allowed maximum length. To this end, the empty space between the tractor and the trailer needs to be minimised. When minimising the space between the tractor and the trailer, the swinging of the trailer about the fifth wheel must be taken into account. When a tractor-trailer combination turns, a front corner of the trailer will follow a generally arc-shaped path, following a radius centred at the pivot point, i.e. the fifth wheel. An area formed between the front wall of the trailer when in a position aligned with the tractor, and the arc-shaped path may be denoted a swing clearance area. It is understood that the swing clearance area will generally have a contour forming the letter D. Normally, no equipment or devices may be permanently arranged in the swing clearance area since these would inhibit the free movement of the trailer about the pivot axis of the fifth wheel.

Although in theory the space between the tractor and the trailer when in an aligned position could be minimised to the maximum length of the D-shaped swing clearance area, there is usually a relatively small additional empty space, between the swing clearance area and the rear wall of the tractor's cab. This area may allow room for connections such as air pipes, electrical cables and the like that are intended to supply the trailer with e.g. pneumatic air and electricity from the tractor. This area is hereinafter referred to as the connection area. Hence, the centre length between the tractor and the trailer when in an aligned position, as measured at the centre of the rear cab wall and in a plane coinciding with the tractor chassis frame, would be equal to the maximum length of the D-shaped swing clearance area plus the length of the intermediate space. In many tractor-trailer combinations used in Europe and in the US, the length of the intermediate space, measured as above, is no more than about 20 cm.

The above considerations regarding the size of the intermediate space are generally valid for a plane coinciding with the chassis frame of the tractor. In this plane, the intermediate space has its maximum horizontal area. However, since the trailer will sometimes tilt vertically in relation to the tractor, in order to allow the trailer to follow the tractor on slopes and the like, the horizontal area of the intermediate space diminishes in an upward vertical direction. Accordingly, the intermediate space forms a cone with an irregular base surface being the horizontal connection area at the chassis frame, and a tip extending towards the direction of the roof of the cab.

The minimising of the gap between the tractor and the trailer is only one of the considerations that are necessary for efficient exploitation of the space available in the tractor-trailer combination. Care may also be taken when positioning relatively bulky devices, such as the starting batteries for the engine. Conventionally, two starting batteries are mounted at the front end of the base frame of the tractor, close to the tractor cab. However, this position of the batteries restricts the maximum possible size of the fuel tanks, which are also mounted to the tractor frame. Since larger fuel tanks would present a substantial advantage, alternative positions for the starting batteries have been tried.

One alternative position enabling the provision of larger fuel-tanks is to arrange the starting batteries at the outer rear end of the tractor frame. The rear end position is advantageous as it liberates more space of the frame for the fuel tanks. However, the rear end position is associated with several drawbacks. First, the rear end position is subject to larger vibrations than the conventional front frame position. In order to withstand these vibrations, the starting batteries may be suspended using a vibration reducing holder, e.g. made of rubber or another vibration reducing material. Such a holder is efficient to reduce vibrations, but is unfortunately relatively expensive. Second, the rear end position of the starting batteries results in that the electrical wiring from the starting batteries to the tractor, i.e. to the engine and the cab where the energy from the battery is required, must extend over a significantly greater distance than with the conventional battery position at the front end of the frame. For the electrical wiring, copper wires having a relatively large diameter must be used so as to enable transmission of the required currents. In all, the necessary amount of copper wire for a rear end position of the batteries may typically add up to a weight of as much as 25 kg. The document US 5 593 167 discloses a starting battery arrangement for a tractor in a tractor-trailer combination.

Hence, it is desired to provide a tractor in which a relatively large portion of the frame may be used for fuel tanks. Another desire is to reduce the cost and/or the tractor weight in view of previously proposed solutions. Further, it is generally required that, for each specific maximum length of the tractor-trailer combination, the available loading space must not be reduced in relation to previous vehicles. Finally, it is desired that any new solution for a tractor shall be applicable to different existing types of tractor-trailer combinations.

The object of the invention is to provide a tractor-trailer combination which is an improvement over prior solutions in view of one or several of the above-mentioned aspects.

The term "starting battery" is herein to be understood as a battery which is operable at least for starting up the engine. In addition, the starting battery could be used for providing power to other purposes, such as e.g. lighting or for use in the interior of the tractor cab.

However, it is possible to use a specific battery, a so called "living" battery for e.g. the purposes of providing cab accessories with power. If a specific living battery is present, the starting battery may be optimised and secured for starting the vehicle, as regards the battery function as well as the design and the position on the tractor. Other terms sometimes used for the living battery are "onboard battery", "cycling battery", "consumer's battery" or "service battery".

With the above-mentioned definitions it is to be understood that the term "starting battery" could encompass a battery which is used both for starting up the engine and for the "living" tasks, i.e. to provide cab accessories with power. The term "living battery" will however never encompass a battery which is used for starting the engine.

The term "front" or "forward" as used herein indicates in the direction towards the front end of the cab of the tractor-trailer combination, whereas the term "rear" or "back" refers to the opposite direction, away from the cab.

The term "length" refers herein to a dimension along the tractor or the trailer, where as the term "height" refers to a vertical dimension along the tractor, and the term "width" to a dimension transverse to the length.

### SUMMARY OF THE INVENTION

The above-mentioned object is achieved by a tractor for a tractor-trailer combination as defined in claim 1.

Previously, the intermediate space in tractor-trailer combinations with a limited total length has not been used for other purposes than containing the above mentioned connections between the tractor and the trailer. As one has endeavoured to minimise the space, the possibility of using it to any other purpose has been overlooked or ignored. In particular, standard shape starting batteries have a size and shape such that they are impossible to arrange in the intermediate space, as they would protrude too far from the cab rear wall. The inventor's have realised that by deviating from the standard shape of the starting batteries it is possible to arrange the same in the previously unexploited intermediate space defined between the swing clearance area and the cab rear wall, while maintaining or enlarging the available loading space of the tractor-trailer combination within the present total length limits

An efficient use of said space is enabled by the battery compartment being arranged as proposed herein. In this way, space at the tractor frame is liberated and may be used as desired, preferably to accommodate relatively large fuel tanks.

Also, the proposed position behind the rear wall of the tractor cab is advantageous in view of vibrations, as compared to the previous rear end position. Finally, the position enables use of relatively short wiring to the engine.

A further advantage is that the proposed battery compartment may be arranged without interfering with the connections being conventionally confined in the intermediate space, which is why modification of the connections is generally not necessary.

Hence, the proposed assembly provides a solution which combines the advantages of different, not combinable previous battery positions, while avoiding the disadvantages of the same. Also, the assembly provides a flexible solution that may be used with different types of vehicles, which is highly desirable in view of manufacture, quality assurance and logistics.

Advantageously, the intermediate space has a pre-selected centre length in the range 5 to 20 cm.

Preferably, the battery compartment is adapted to enclose a substantially flat battery. A substantially flat battery is a battery having sides in two dimensions being relatively long, i.e. the height and width of the battery compartment must be relatively long, as compared to the side in the third dimension being relatively short, i.e. the length of the battery compartment must be relatively short. (This shape is different to the shape of the previous standard shape batteries which rather have two relatively short sides and one relatively long side.)

Advantageously the battery compartment may define a battery space having an extension in the longitudinal direction along the tractor being no more than 50% of its extension in a height direction, preferably no more than 40%, most preferred no more than 25%.

Preferably, the battery compartment has a length of no more than 20 cm, preferably no more than 15 cm, most preferred no more than 10 cm. A small length dimension will allow placement of the assembly on various tractor-trailer combinations having different pre-defined centre lengths of their intermediate space without intruding on their available loading space.

Advantageously, the height of the compartment should be restricted so as not to delimit the tilting motion of the cab which may occur when driving. To this end, the height should preferably be no more than 50% of the height of the cab. Generally, the height could be less than or equal to 100 cm, preferably less than or equal to 70 cm.

The width of the compartment may advantageously be selected to be approximately equal to the height of the compartment, hence e. g. less than or equal to 100 cm, preferably less than or equal to 70 cm. The width and height of the assembly being approximately equal provides useful proportions for handling and is advantageous for the stability of the compartment.

The tractor is of the type wherein the pre-selected centre length of the intermediate space is no more than 20 cm at the centre of the rear wall and measured in a direction towards the trailer. Preferably, the centre length is no more than 15 cm, most preferred no more than 10 cm. Advantageously the pre-selected centre length of the intermediate space is within a range of 5 to 20 cm, preferably within a range of 5 to 15 cm, most preferred within a range of 5 to 10 cm.

The tractor may advantageously be provided with a connection rack for supporting at least one connection to the trailer, which connection rack is arranged in the intermediate space. In this case, the battery compartment may be arranged next to the connection rack.

Advantageously, the battery compartment may be arranged at least partly surrounded by the connection rack. For example, the connections may be arranged on an arc shaped rack being arranged extending upwardly from the tractor frame and surrounding the battery compartment. This provides for efficient use of the intermediate space.

Preferably, the maximum length of the connection rack in a longitudinal direction along the tractor is no longer than the length of the battery compartment.

In an alternative embodiment, the battery compartment and the connection rack form a unitary member,. A unitary member assembly is particularly easy to handle and to mount on the tractor, which may speed up production and hence be cost-efficient. Further, uniformly shaped unitary member assemblies may be used for arrangement on different tractor-trailer types, which may lower the costs for production and mounting thereof.

In yet another alternative embodiment, the battery compartment forms an assembly with a chassis frame cross member component. The chassis frame is normally provided with a front cross member component which extends transversely along the frame and contributes to the stability and stiffness thereof. By forming the transverse cross member as a unitary member with the battery compartment, the necessary stability and stiffness may be achieved using fewer components than in previous solutions. The traditional cross-member may hence be replaced by the assembly.

The different embodiments may be combined, resulting in a unitary member comprising a battery compartment, a connection rack, and a frame cross-member. The obtained assembly fulfils a triple purpose: providing enclosure of the battery, providing support for the connections to the trailer, and stabilising the chassis frame. The material of such a unitary member will be efficiently used for the three purposes, which diminishes the amount of material to be used and the weight added to the tractor. Also, the single operation of mounting the unitary member will replace the mounting of three different devices to the tractor, which will facilitate mounting considerably.

Advantageously, a noise damper device, for dampening noise from the engine may be provided in the intermediate space. Further, a heat insulation device protecting the battery compartment from heat developed in the engine of the tractor may be provided in the intermediate space. Also, a vibration damper device protecting the battery compartment from vibrations which may occur when the tractor-trailer combination is used may be provided in the intermediate space It is understood that only one or several of these devices may be arranged in the intermediate space in the vicinity of the battery compartment.

Preferably, a single unit may form at least two of said noise damper device, heat insulation device and vibration damper device. It is believed to be particularly useful to combine the noise insulation device and the heat insulation device. These two tasks could for example be performed by a mat of a noise and heat insulating material arranged between the rear cab wall and the battery compartment or at the end of the battery compartment facing the rear wall.

Preferably, the noise damper device, heat insulation device and/or vibration damper device may be arranged within a unitary member as described above. In this case, the devices may be added to the assembly during production thereof, and the mounting of the unitary member assembly to the tractor may be made quick and easy, including the insulation or damper devices.

In another aspect, the invention relates to a battery compartment for arrangement in a intermediate space of a tractor-trailer combination, wherein the height and width of the battery compartment, respectively, are substantially greater than the length of the battery compartment such that the battery compartment is generally flat.

The proposed battery compartment may advantageously be provided with a secondary cooler circuit if necessary.

### BRIEF DESCRIPTION OF THE DRAWINGS

Other features and advantages of the present invention will appear more clearly from the following description of an exemplary embodiment, wherein
Fig. 1 is a schematic plan view of a tractor-trailer combination, where the tractor is a tractor according to the invention;
Fig. 2 is a schematic side view of the tractor-trailer combination of Fig. 1;
Fig. 3 is a perspective view of the embodiment of a battery compartment of the tractor of Fig. 1, where the trailer is removed for better visibility;
Fig. 4 is a perspective view of a second embodiment of a battery compartment, where the trailer is removed for better visibility;
Fig. 5 is a perspective view of a third embodiment of a battery compartment, where the trailer is removed for better visibility; and
Fig. 6 is a schematic top view of a tractor-trailer combination, where the tractor is provided with a battery compartment as in Fig. 5.

### DETAILED DESCRIPTION OF PREFERRED EMBODIMENTS

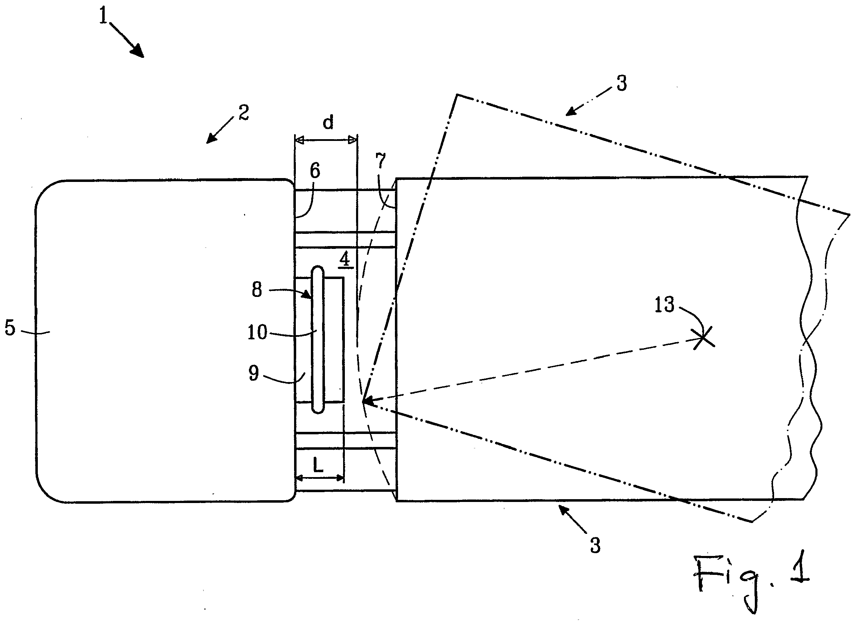

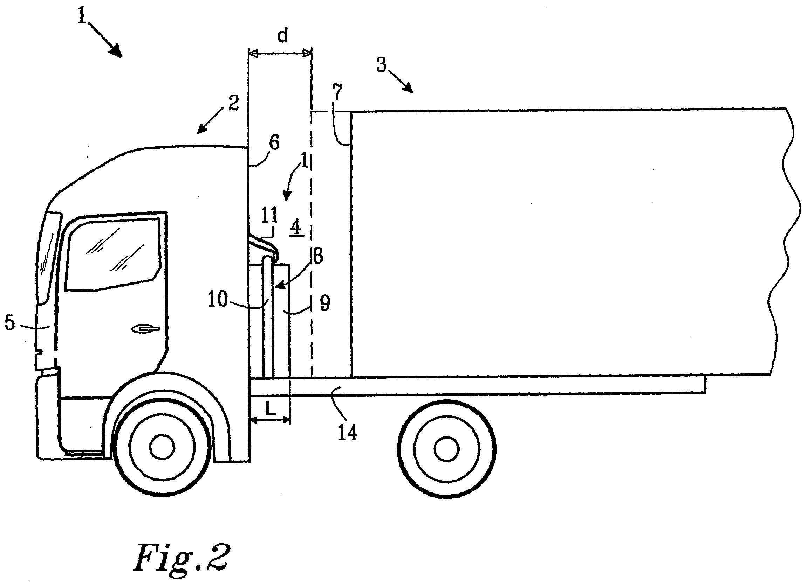

Fig. 1 illustrates an embodiment of a tractor-trailer combination 1, where the tractor 2 has battery compartment 9, being provided in the intermediate space 4 between the tractor 2 and the trailer 3. In Figs 1 and 2, the size of the battery compartment 9 and of other components installed in the intermediate space 4, as well as the length of the intermediate space 4 itself have been exaggerated in relation to the vehicle as a whole, for the purpose of better visibility.

In Fig. 1, the tractor 2 is connected to the trailer 3. The connection is typically made via a fifth wheel or the like, providing a turning axis 13 for the trailer 3 about the tractor 2. In Fig. 1 the trailer 3 is aligned with the tractor 2. The dotted lines illustrate a position where the trailer 3 forms an angle with the tractor 2, and the D-shaped path formed if the trailer is allowed to pivot about the turning axis 13. The area limited by the D-shaped path is generally denoted a swing clearance area, and must be kept free from arrangements such that the trailer 3 may freely swing about the turning axis 13.

Herein, the space formed between the rear wall 6 of the tractor cab 5 and the swing clearance area is denoted an intermediate space 4, which is illustrated in Fig. 1. The intermediate space 4 has a pre-selected centre length d, as measured in a plane coinciding with the chassis frame of the tractor and at the centre of the rear wall of the cab. The distance between the rear cab wall 6 and the front wall 7 the trailer when the trailer is aligned with the tractor is equal to the pre-selected centre length d of the intermediate space 4 plus the maximum length of the swing clearance area. As discussed above, it is generally desired to minimize the pre-selected length d so as to enable maximum loading space of the trailer within standardized maximum total lengths of different vehicles. To this end, the pre-selected centre length d of the intermediate space 4 should be minimized. It is to be understood that the centre length d of the intermediate space 4 will coincide with the maximum length of the swing clearance area, which occurs at the vertical center of the rear cab wall 6 and trailer front end 7.

In the embodiment illustrated in Figs 1 to 3, a battery compartment 9 for a starting battery is arranged in the intermediate space 4. The battery compartment 9 is mounted close to the rear wall 6 of the cab 5 and extends in a length direction towards the trailer 3 along the length of the tractor 2.

As seen in Figs 1 to 3, the height and width of the battery compartment 9 are greater than the length of the battery compartment 9. This means that the standard starting battery shape is not to be used. Instead, a new starting battery shape is envisaged, being generally flat. Such starting batteries may be provided with recent battery technologies such as e.g. bipolar lead/acid batteries or bipolar NiMh batteries, Start Optimised Battery (SOB), AGM batteries, spiral cell design batteries (e.g. OPTIMA). Presently, bipolar batteries are believed to be particularly advantageous. It is understood that such batteries will not only enable a flat appearance of the batteries, but will also be less bulky and less heavy than today's standard starting batteries.

For a generally flat shape being suitable for the proposed assembly, the battery compartment should preferably have a length being no more than 25% of its height. In other words, the volume needed for the battery should be taken up in the height rather than in the length direction.

The illustrated battery compartment 9 has a length of about 10 cm, and the centre length d of the intermediate space 4 in a plane coinciding with the tractor chassis is about 20 cm.

Although the length of the battery compartment 9 is the most critical dimension in order to enable the compartment 9 to be accommodated in the intermediate space 4, there are also requirements as to the width and height of the compartment 9. Since the intermediate space 4 tapers off in a direction towards the roof of the cab 5, the compartment 9 must have a suitable height so as to remain within the intermediate space 4. If not, the cab or the trailer might risk hitting the compartment 9 when the cab 5 and/or trailer 3 are tilted when driving.

In other words, the length of the intermediate space 4 diminishes in a direction upwards from a plane coinciding with the tractor chassis. Hence, even though the centre length d of the intermediate space as defined herein being about 20 cm allows room for a battery compartment being only slightly shorter than 20 cm, it might be suitable to select an even shorter battery compartment being e.g. less than 15 cm or less than 10 cm, in order to allow the necessary swing clearance of the trailer and tractor cab in a plane being longitudinally higher than a plane coinciding with the chassis frame of the tractor.

In the illustrated embodiment, the height and width are both about 70 cm. Although a square shape is preferred, it is understood that the height and width may be varied such that the assembly forms e.g. a rectangle rather than a square.

In the embodiment of Fig. 1, the battery compartment 9 is arranged in the intermediate space 4 as an assembly 8 together with a connection rack 10. The assembly 8 comprises a compartment for a starting battery 9 and a connection rack 10 for supporting at least one connection 11 (see Fig. 2) to the trailer 3. The connections supported by the connection rack may typically be pneumatic air and electrical connections for providing the trailer 3 with air for pneumatic control purposes and with electricity. Preferably, both air connections 11 and electric connections 11 are supported by the connection rack 10, so as to achieve a compact and practical configuration of said connections.

As is most clearly seen in Fig. 2, the battery compartment 9 in the illustrated embodiment is mounted essentially at the rear wall 6 of the cab 5, and extends in a longitudinal direction through the arc-shaped rack 10. Hence, the battery compartment 9 protrudes somewhat from the arc-shaped rack 10.

The maximum length L of the assembly 8 in a longitudinal direction along the tractor 2 is substantially equal to the length of the battery compartment 9. This means that the size of the battery will decide the maximum length of the assembly 8 and hence be crucial for whether the assembly may be arranged within the pre-selected length d of the intermediate space 4 or not.

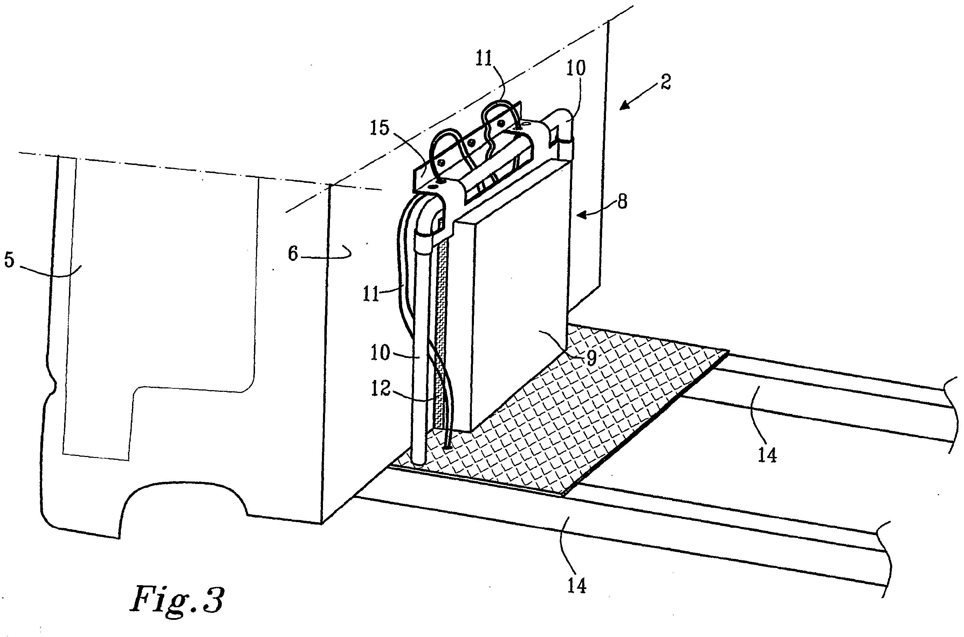

As is more clearly seen in Fig. 3, the assembly 8 is formed such that the connection 11 to the trailer 3 is arranged next to the battery compartment 9 without adding to the total length of the assembly 8. In this case, the assembly 8 is formed such that the connection 11 to the trailer 3 is arranged surrounding the battery compartment 9. To this end, the assembly 8 comprises a connection rack 10 which is arc-shaped and extends upwardly from the frame 14 of the tractor 2. The battery compartment 9 is confined within the space formed between the frame 14 and the arc-shaped rack 10. The rack 10 in turn supports several connections 11 from the tractor 2 to the trailer 3.

In Fig. 3 it is shown how the assembly 8 further comprises a combined noise insulation -heat insulation device 12. The insulation device 12 is arranged between the rear cab wall 6 and the battery when in place in the battery compartment 9. For noise insulation, known materials such as artificial wool or rags may be suitable. For heat insulation, heat absorbing materials such as compound structures formed by sheets of reflective materials sandwiched with insulating material may be used.

The arc-shaped connection rack 10 is in this embodiment welded to the vehicle frame 14 at its lower end portions. The upper, horizontal portion of the arc is attached to the rear wall 6 of the cab 2 by means of a bracket 15 which is fastened to the rear wall 6. The bracket 15 also serves to connect the connection rack 10 with the battery compartment 9, such that a connection rack-battery compartment assembly 8 is formed. The connection rack-battery compartment assembly 8 may suitably be formed from stamped sheet steel.

In addition, a separate vibration damper device may be arranged to protect the battery compartment from vibrations. However, as mentioned above, the proposed assembly position is advantageous in view of vibrations, which is why the need for vibration damping is relatively moderate.

In the embodiment illustrated in Fig. 3, the battery compartment 9 and the connection rack 10 form separate units. Further, in this embodiment, the assembly 8 does not replace the transversal chassis frame cross member. However, it is understood that in this embodiment the battery compartment 9 may be formed and arranged to stabilise the frame such that the transversal frame cross member may be removed.

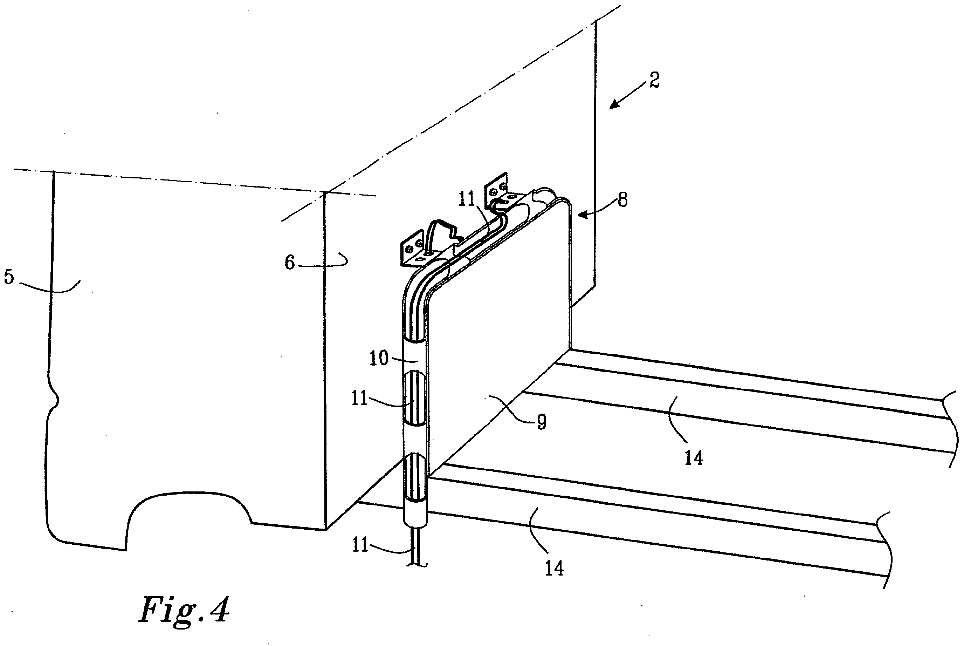

In Fig. 4, a second embodiment of tractor with a battery compartment in accordance with the invention is illustrated. In this embodiment, the battery compartment 9 is formed as an assembly 8 with a connection rack 10. The assembly 8 is formed as an integral unit being arranged in the intermediate space 4 immediately behind the rear wall 6 of the cab 5. Thus, the outer periphery of the box forming the battery compartment 9 forms the connection rack 10. In this embodiment, the outer periphery forms holding means for holding connections 10, 11 to the trailer. Further, in this embodiment, the unitary member assembly 8 has the additional function of connecting the longitudinal members of the chassis frame. Hence, the assembly 8 functions so as to stabilise the frame in a transversal direction and hence replaces the transverse frame cross member otherwise provided across the longitudinal frame members 14.

Various damping and/or insulation devices 12 as mentioned in relation to the embodiment of Fig. 3 may be arranged within the battery compartment 9 of the unitary assembly. The unitary assembly may advantageously be formed from sheet metal.

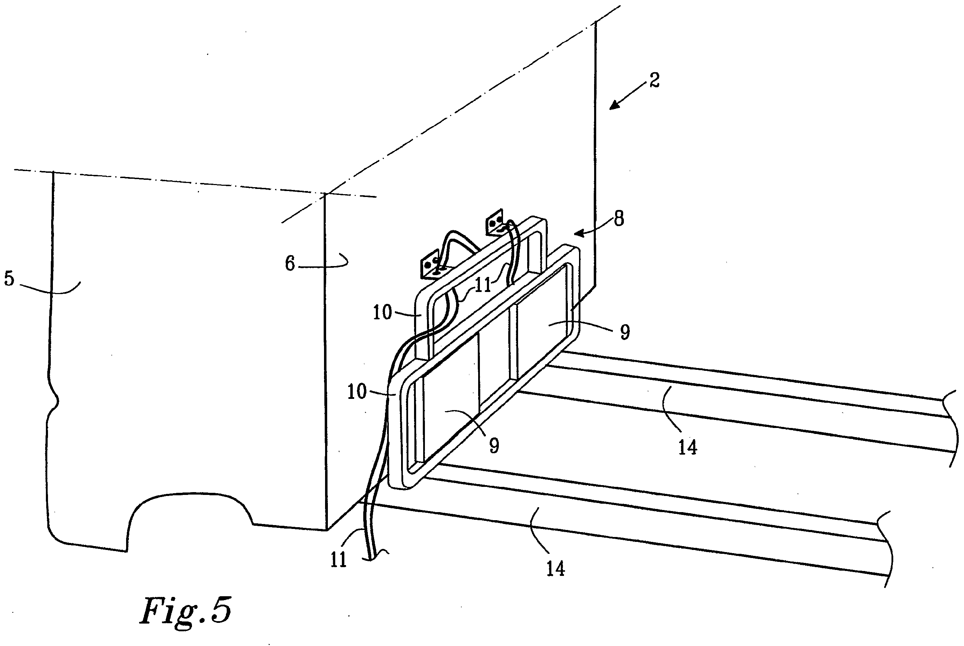

In Fig. 5, a third embodiment of a tractor in accordance with the invention is illustrated. In this embodiment, the tractor is provided with two separate battery compartments 9, each of which will accommodate a starting battery. The battery compartments are arranged on each side of a vertical centre line of the rear cab wall 6. This embodiment is advantageous as it allows for efficient use of the connecting space 4 between the tractor and the trailer. As is best seen in Fig. 1, the intermediate space 4 is larger towards the sides of the rear cab wall 6 than at the centre thereof. Each of the battery compartments 9 are generally flat, i.e. they have a extension in the length direction being substantially smaller than their extension in the two other directions, that is the height and width directions.

Nevertheless, as the battery compartments 9 protrude somewhat from the other components installed in the intermediate space 4 this embodiment, such as the connection rack 10, it is useful to arrange the battery compartments closer to the side portions of the rear cab wall 6, so as to minimize the length of the battery compartment 9 - connection rack 10 assembly 8 at the centre of the rear cab wall. Thus, with this arrangement, the pre-selected length of the intermediate space 4 may be further diminished.

In the embodiment of Fig. 5, the connection rack 10 also provides the function of a frame stabilizing member, and replaces the transverse frame cross member otherwise provided across the longitudinal frame members 14.

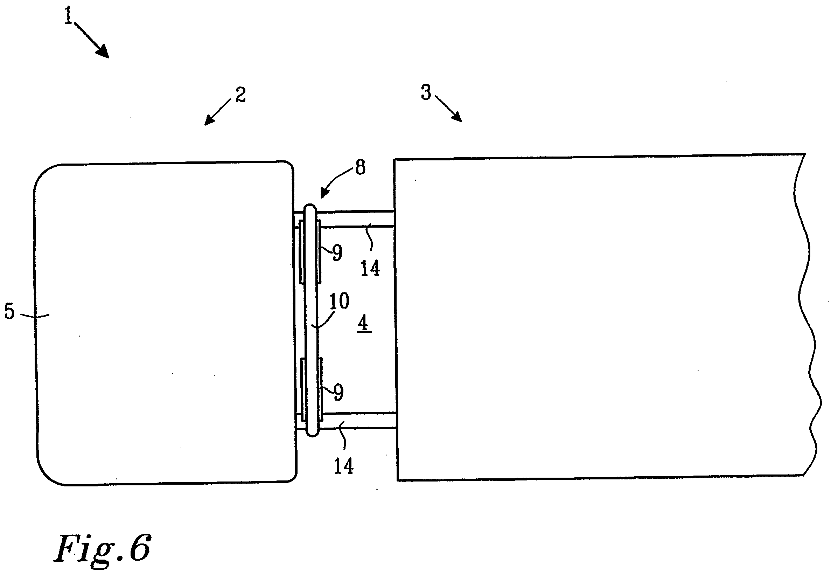

The embodiments of Figs 4 to 6 may in other aspects be similar to the embodiment described in Fig. 3, and relevant passages of the description of the first embodiment applies also to the second and third embodiments.

Although the illustrated embodiment all advantageous designs where a connection rack 10 being arranged in connection with the battery compartment 9, it is understood that the battery compartment may be installed in accordance with the invention without any connection rack being present.

It is to be understood that not only two, but three or more battery compartments could be provided.at the tractor. Also, one single battery compartment could be formed so as to contain a number of starting batteries or combinations of at least one starting battery and a separate living battery. In particular, it is believed to be advantageous to form one battery compartment as described above which may include several, most preferred four, individual starting batteries.

It is to be understood that numerous embodiments and alternatives are possible within the scope of the appended claims. For example, vibration damping or noise reducing devices may be arranged at different positions about or in the assembly so as to perform a damping or reducing effect. The shape and extension of the connection rack may be varied, although it is preferred that it should not add to the total length of the assembly. The manner of connecting the assembly to the tractor, either to the cab rear wall and/or the tractor frame may be varied. The battery may be used exclusively as a starting battery, in which case a separate living battery may be arranged elsewhere on the tractor, or as a combined starting battery and living battery.

## Claims

1. Tractor for a tractor-trailer combination (1), said tractor (2) being connected to a trailer (3), wherein the tractor-trailer combination (1) forms an intermediate space (4) having a length (d) of less than 20 cm, which length (d) extends from a rear wall (6) of a tractor cab (5) of the tractor (2) in a direction towards the trailer (3) when the tractor is aligned with the trailer, the length (d) has an extension from the rear wall (6) of the tractor cab (5) to a maximum longitudinal position of a swing clearance area, said swing clearance area is formed by the travelling of a corner edge of the trailer (3) when the trailer (3) is turning about the tractor (2), wherein the tractor (2) further comprises a battery compartment (9) including a starting battery, said battery compartment (9) being mounted to the rear wall (6) of the tractor cab (5) and arranged in said intermediate space.

2. A tractor according to claim 1, wherein the height and width of the battery compartment (9) are greater than the length of the battery compartment (9).

3. A tractor according to claim 2, wherein said battery compartment (9) has a length being no more than 50% of its height, preferably no more than 40%, most preferred no more than 25%.

4. A tractor according to any one of the previous claims, wherein said battery compartment (9) has a length of no more than 20 cm, preferably no more than 15 cm, most preferred no more than 10 cm.

5. A tractor according to any one of the previous claims, wherein said battery compartment (9) has a width and a height being less than or equal to 100 cm, respectively, preferably less than or equal to 70 cm, respectively.

6. A tractor according to any one of the previous claims, wherein the tractor is provided with a connection rack (10) for supporting at least one connection (11) to the trailer, said connection rack being arranged in the intermediate space.

7. A tractor according to claim 6, wherein the connection rack (10) to the trailer (3) is arranged next to the battery compartment (9).

8. A tractor according to claim 6, wherein the connection rack (10) is arranged at least partially surrounding said battery compartment (9).

9. A tractor according to any one of the claims 6 to 8, wherein the battery compartment (9) and the connection rack (10) form a unitary member (8).

10. A tractor according to claim 9, wherein the maximum length (L) of the unitary member (8) in a longitudinal direction along the tractor (2) is substantially equal to the length of the battery compartment (9).

11. A tractor according to any one of the preceding claims, wherein the battery compartment (9) forms a unitary member with a chassis frame cross member component (16).

12. A tractor according to any one of the previous claims wherein said battery compartment is integrally formed from sheet metal.

13. A tractor according to any one of the previous claims, wherein said pre-selected length of the intermediate space (4) is no more than 15 cm, most preferred no more than 10 cm.

14. A tractor according to any one of the previous claims, wherein at least one of a noise damper device (12), a heat insulation device, and a vibration damper device is arranged in said intermediate space.

15. A tractor according to claim 14, wherein at least one device (12) is arranged between said rear cab wall (6) and a battery when in place in the battery compartment (9).

16. A tractor according to claim 15, wherein a single unit (12) forms at least two of said noise damper device, heat insulation device and vibration damper device, preferably the noise damper device and the heat insulation device.

17. A tractor according to claim 15 or 16 wherein said device (12) is arranged within the battery compartment (9).

18. A tractor according to any one of the previous claims, wherein the length of the intermediate space is within a range of 5 to 20 cm, preferably within a range of 5 to 15 cm, most preferred within a range of 5 to 10 cm.

## Patentansprüche

1. Zugmaschine für eine Zugmaschine-Anhänger-Kombination (1), wobei die Zugmaschine (2) mit einem Anhänger (3) verbunden ist, wobei die Zugmaschine-Anhänger-Kombination (1) einen Zwischenraum (4) bildet, der eine Länge (d) von weniger als 20 cm aufweist, wobei sich die Länge (d) von einer hinteren Wand (6) einer Zugmaschinenkabine (5) der Zugmaschine (2) in einer Richtung zum Anhänger (3) hin erstreckt, wenn die Zugmaschine mit dem Anhänger fluchtend ausgerichtet ist, die Länge (d) eine Erstreckung von der hinteren Wand (6) der Zugmaschinenkabine (5) bis zu einer maximalen Längsposition eines Schwingspielraumbereichs aufweist, wobei der Schwingspielraumbereich durch das Bewegen einer Eckkante des Anhängers (3) gebildet wird, wenn sich der Anhänger (3) um die Zugmaschine (2) dreht, wobei die Zugmaschine (2) ferner ein Batteriefach (9) umfasst, das eine Starterbatterie umfasst, wobei das Batteriefach (9) an der hinteren Wand (6) der Zugmaschinenkabine (5) montiert und in dem Zwischenraum angebracht ist.

2. Zugmaschine nach Anspruch 1, wobei die Höhe und Breite des Batteriefachs (9) größer als die Länge des Batteriefachs (9) ist.

3. Zugmaschine nach Anspruch 2, wobei das Batteriefach (9) eine Länge aufweist, die nicht mehr als 50%, vorzugsweise nicht mehr als 40%, am meisten bevorzugt nicht mehr als 25% seiner Höhe aufweist.

4. Zugmaschine nach einem der vorhergehenden Ansprüche, wobei das Batteriefach (9) eine Länge von nicht mehr 20 cm, vorzugsweise nicht mehr als 15 cm, am meisten bevorzugt nicht mehr als 10 cm aufweist.

5. Zugmaschine nach einem der vorhergehenden Ansprüche, wobei das Batteriefach (9) eine Breite und eine Höhe aufweist, die jeweils geringer als oder gleich 100 cm, vorzugsweise jeweils geringer als oder gleich 70 cm ist.

6. Zugmaschine nach einem der vorhergehenden Ansprüche, wobei die Zugmaschine mit einem Verbindungsgestell (10) zum Tragen wenigstens einer Verbindung (11) mit dem Anhänger versehen ist, wobei das Verbindungsgestell in dem Zwischenraum angeordnet ist.

7. Zugmaschine nach Anspruch 6, wobei das Verbindungsgestell (10) zu dem Anhänger (3) neben dem Batteriefach (9) angeordnet ist.

8. Zugmaschine nach Anspruch 6, wobei das Verbindungsgestell (10) das Batteriefach (9) wenigstens teilweise umgebend angeordnet ist.

9. Zugmaschine nach einem der Ansprüche 6 bis 8, wobei das Batteriefach (9) und das Verbindungsgestell (10) ein einheitliches Element (8) bilden.

10. Zugmaschine nach Anspruch 9, wobei die maximale Länge (L) des einheitlichen Elements (8) in einer Längsrichtung entlang der Zugmaschine (2) im Wesentlichen gleich der Länge des Batteriefachs (9) ist.

11. Zugmaschine nach einem der vorhergehenden Ansprüche, wobei das Batteriefach (9) ein einheitliches Element mit einer Fahrgestellrahmen-Querelementkomponente (16) bildet.

12. Zugmaschine nach einem der vorhergehenden Ansprüche, wobei das Batteriefach einstückig aus Metallblech ausgebildet ist.

13. Zugmaschine nach einem der vorhergehenden Ansprüche, wobei die vorausgewählte Länge des Zwischenraums (4) nicht mehr als 15 cm, am meisten bevorzugt nicht mehr als 10 cm beträgt.

14. Zugmaschine nach einem der vorgehenen Ansprüche, wobei eine Geräuschdämpfervorrichtung (12), eine Wärmeisoliervorrichtung und/oder eine Vibrationsdämpfervorrichtung in dem Zwischenraum angeordnet ist.

15. Zugmaschine nach Anspruch 14, wobei wenigstens eine Vorrichtung (12) zwischen der hinteren Kabinenwand (6) und einer Batterie angeordnet ist, wenn sie in dem Batteriefach (9) platziert ist.

16. Zugmaschine nach Anspruch 15, wobei eine einzelne Einheit (12) wenigstens zwei der Geräuschdämpfervorrichtung, Wärmeisoliervorrichtung und Vibrationsdämpfervorrichtung, vorzugsweise der Geräuschdämpfervorrichtung und der Wärmeisoliervorrichtung, bildet.

17. Zugmaschine nach Anspruch 15 oder 16, wobei die Vorrichtung (12) innerhalb des Batteriefachs (9) angeordnet ist.

18. Zugmaschine nach einem der vorhergehenden Ansprüche, wobei die Länge des Zwischenraums innerhalb eines Bereichs von 5 bis 20 cm, vorzugsweise innerhalb eines Bereichs von 5 bis 15 cm, am meisten bevorzugt innerhalb eines Bereichs von 5 bis 10 cm, ist.

## Revendications

1. Tracteur pour une combinaison tracteur-remorque (1), ledit tracteur (2) étant relié à une remorque (3), où la combinaison tracteur-remorque (1) forme un espace intermédiaire (4) ayant une longueur (d) inférieure à 20 cm, laquelle longueur (d) s'étend d'une paroi arrière (6) d'une cabine de tracteur (5) du tracteur (2) dans une direction vers la remorque (3) lorsque le tracteur est aligné avec la remorque, la longueur (d) s'étend de la paroi arrière (6) de la cabine de tracteur (5) jusqu'à une position longitudinale maximale d'une zone de dégagement tracteur-remorque, ladite zone de dégagement tracteur-remorque est formée par le déplacement d'un bord d'angle de la remorque (3) lorsque la remorque (3) tourne autour du tracteur (2), dans lequel
le tracteur (2) comprend en outre un compartiment de batterie (9) comportant une batterie de démarrage, ledit compartiment de batterie (9) étant monté sur la paroi arrière (6) de la cabine de tracteur (5) et agencé dans ledit espace intermédiaire.

2. Tracteur selon la revendication 1, dans lequel la hauteur et la largeur du compartiment de batterie (9) sont supérieures à la longueur du compartiment de batterie (9).

3. Tracteur selon la revendication 2, dans lequel ledit compartiment de batterie (9) a une longueur inférieure ou égale à 50% de sa hauteur, de préférence inférieure ou égale à 40%, idéalement inférieure ou égale à 25%.

4. Tracteur selon l'une quelconque des revendications précédentes, dans lequel ledit compartiment de batterie (9) a une longueur inférieure ou égale à 20 cm, de préférence inférieure ou égale à 15 cm, idéalement inférieure ou égale à 10 cm.

5. Tracteur selon l'une quelconque des revendications précédentes, dans lequel ledit compartiment de batterie (9) a une largeur et une hauteur inférieures ou égales à 100 cm, respectivement, de préférence inférieures ou égales à 70 cm, respectivement.

6. Tracteur selon l'une quelconque des revendications précédentes, dans lequel le tracteur est muni d'un bâti de raccord (10) pour supporter au moins un raccord (11) à la remorque, ledit bâti de raccord étant agencé dans l'espace intermédiaire.

7. Tracteur selon la revendication 6, dans lequel le bâti de raccord (10) à la remorque (3) est agencé à côté du compartiment de batterie (9).

8. Tracteur selon la revendication 6, dans lequel le bâti de raccord (10) est agencé au moins partiellement autour dudit compartiment de batterie (9).

9. Tracteur selon l'une quelconque des revendications 6 à 8, dans lequel le compartiment de batterie (9) et le bâti de raccord (10) forment un élément unitaire (8).

10. Tracteur selon la revendication 9, dans lequel la longueur maximale (L) de l'élément unitaire (8) dans une direction longitudinale le long du tracteur (2) est sensiblement égale à la longueur du compartiment de batterie (9).

11. Tracteur selon l'une quelconque des revendications précédentes, dans lequel le compartiment de batterie (9) forme un élément unitaire avec un composant d'élément transversal de cadre de châssis (16).

12. Tracteur selon l'une quelconque des revendications précédentes, dans lequel ledit compartiment de batterie est intégralement formé à partir d'une tôle.

13. Tracteur selon l'une quelconque des revendications précédentes, dans lequel ladite longueur présélectionnée de l'espace intermédiaire (4) est inférieure ou égale à 15 cm, idéalement inférieure ou égale à 10 cm.

14. Tracteur selon l'une quelconque des revendications précédentes, dans lequel au moins l'un d'un dispositif d'insonorisation (12), d'un dispositif d'isolation thermique et d'un dispositif amortisseur de vibrations est agencé dans ledit espace intermédiaire.

15. Tracteur selon la revendication 14, dans lequel au moins un dispositif (12) est agencé entre ladite paroi arrière de cabine (6) et une batterie lorsqu'elle est en place dans le compartiment de batterie (9).

16. Tracteur selon la revendication 15, dans lequel une seule unité (12) forme au moins deux desdits dispositif d'insonorisation, dispositif d'isolation thermique et dispositif amortisseur de vibrations, de préférence le dispositif d'insonorisation et le dispositif d'isolation thermique.

17. Tracteur selon la revendication 15 ou 16, dans lequel ledit dispositif (12) est agencé dans le compartiment de batterie (9).

18. Tracteur selon l'une quelconque des revendications précédentes, dans lequel la longueur de l'espace intermédiaire est comprise dans une plage allant de 5 à 20 cm, de préférence dans une plage allant de 5 à 15 cm, idéalement dans une plage allant de 5 à 10 cm.
